(19) Europäisches Patentamt
European Patent Office
Office européen des brevets

(11) EP 0 796 895 A1

## EUROPEAN PATENT APPLICATION

(12)

(43) Date of publication:
24.09.1997 Bulletin 1997/39

(21) Application number: 97104573.7

(22) Date of filing: 18.03.1997

(51) Int. Cl.$^6$: **C08L 25/02**, C08L 51/04
// (C08L25/02, 21:00, 53:02),
(C08L51/04, 53:02)

(84) Designated Contracting States:
BE DE ES FR GB IT NL SE

(30) Priority: 22.03.1996 JP 66349/96
17.02.1997 JP 32202/97

(71) Applicant:
IDEMITSU PETROCHEMICAL CO., LTD.
Minato-ku, Tokyo 108 (JP)

(72) Inventors:
• Takeuchi, Satoshi
Ichihara-shi, Chiba-ken (JP)

• Katou, Kouji
Ichihara-shi, Chiba-ken (JP)
• Okabe, Shigeya
Ichihara-shi, Chiba-ken (JP)
• Tsubokura, Yutaka
Minato-ku, Tokyo (JP)

(74) Representative: Türk, Gille, Hrabal, Leifert
Brucknerstrasse 20
40593 Düsseldorf (DE)

(54) **Rubber-modified aromatic vinyl resin composition**

(57) The object of the invention is to provide, as an a general resin composition excellent in balance between impact resistance and transparency, a rubber-modified aromatic vinyl resin composition which, when formed into a sheet item, allows the anisotropy of its strength to be lowered. The present rubber-modified aromatic vinyl resin composition comprises rubbery elastomer parts in the form of particles and straight-chain, branched, or network rubbery elastomer parts which are dispersed in an aromatic vinyl polymer, the surface mean particle diameter of said rubbery elastomer parts in the form of particles (limited to those having a major diameter/minor diameter ratio of from 1 to 2) being 0.1 μm or less and the average thickness of said straight-chain, branched, or network rubbery elastomer parts being 0.04 μm or less.

FIG. I

## Description

BACKGROUND OF THE INVENTION

1. Field of the Invention

The present invention relates to a rubber-modified aromatic vinyl resin composition excellent in balance between transparency and impact resistance, and more particularly to a rubber-modified transparent aromatic vinyl resin composition that can be molded by various molding methods, such as injection molding, injection blow molding, blow molding, biaxial orientation blow molding, extrusion, and can be preferably used particularly for various molded sheet items, such as beverage cups, packs for eggs and bean curd, lids, and trays for meat and fish.

2. Description of the Prior Art

For molded sheet items of polystyrenes most generally used for various trays, packs, and other such things serving as food containers, a molding material commonly called GPPS (styrene homopolymer) which is excellent in transparency but lacks in impact resistance and a molding material commonly called HIPS (rubber-modified polystyrene) which is excellent in impact resistance but lacks in transparency are used, but these molding materials are unsatisfactory in balance between transparency and impact resistance, making it desirable to develop a well-balanced material.

In order to solve that problem, there are conventionally known means so as to improve impact resistance, for example, a method wherein a polystyrene and a rubbery elastomer, particularly a styrene/butadiene block copolymer, are kneaded (Japanese Patent Publication Nos. 250/1978 and 62251/1979). However, in this method, as the added amount of the rubbery elastomer is increased, the impact resistance is improved, but the rigidity is decreased and the anisotropy of the strength balance of the molded sheet item (the ratio, for example, of the strength in the oriented direction to the strength in the direction perpendicular thereto) is increased, leading to other disadvantages to cause, for example, a molding trouble in a vacuum forming step, and therefore this method cannot solve the problem satisfactorily. Further, there is a suggested method wherein HIPS having rubber-like particles of 0.5 $\mu$m or less with a single occlusion structure and a styrene/butadiene block copolymer are kneaded (Japanese Patent Publication No. 126475/1995) and there is also a suggested rubber-modified polystyrene high in transparency wherein a rubbery elastomer in the form of fine particles is dispersed in a polystyrene continuous phase (European Published Patent Publication No. 0069792). However, still it cannot be said that even these are satisfactory in balance between transparency and impact resistance.

SUMMARY OF THE INVENTION

The object of the present invention is to provide a resin composition excellent in balance between impact resistance and transparency, and more particularly a rubber-modified aromatic vinyl resin composition low in anisotropy, for example, of strength when made into a molded sheet item.

The inventors of the present invention have studied intensively to attain the above object and have found that by controlling the factors of the form of rubbery elastomer components, the balance of physical properties is improved considerably, completing the present invention. That is, the subject matter of the present invention is as follows:

(1) A rubber-modified aromatic vinyl resin composition, comprising rubbery elastomer parts in the form of particles having a major diameter/minor diameter ratio from 1 to 2 and straight-chain, branched, or network rubbery elastomer parts which are dispersed in an aromatic vinyl polymer, the surface mean particle diameter of said rubbery elastomer parts in the form of particles being 0.1 $\mu$m or less and the average thickness of said straight-chain, branched, or network rubbery elastomer parts being 0.04 $\mu$m or less.

(2) The rubber-modified aromatic vinyl resin composition as stated in the above (1), wherein 40 or more of said rubbery elastomer parts in the form of particles are observed per 4 $\mu$m$^2$ and the total length of said straight-chain, branched, or network rubbery elastomer parts is 20 $\mu$m or more per 4 $\mu$m$^2$ when the rubber-modified aromatic vinyl resin composition is observed under a transmission electron microscope.

(3) The rubber-modified aromatic vinyl resin composition as stated in the above (1) or (2), wherein the signal strength 60 $\mu$s after the pulse irradiation is 15 to 35 % of the signal strength immediately after the pulse irradiation in the free induction decay measurement by pulse NMR.

(4) A rubber-modified aromatic vinyl resin composition, comprising

30 to 80 % by weight of a component (A) made of a rubber-modified aromatic vinyl resin composition comprising a rubbery elastomer in the form of particles having a major diameter/minor diameter ratio of from 1 to 2 that are dispersed in a matrix of an aromatic vinyl resin, said rubbery elastomer amounting to 3 to 25 % by weight, and the surface mean particle diameter of said rubbery elastomer being 0.1 $\mu$m or less,

10 to 70 % by weight of a component (B) made of a thermoplastic block copolymer made up of 55 to 85 % by weight of an aromatic vinyl compound and 15 to 45 % by weight of a conjugated diene compound, and

0 to 15 % by weight of a component (C) made of a thermoplastic block copolymer made up of 10 to 50 % by weight of an aromatic vinyl compound and 50 to 90 % by weight of a conjugated diene compound.

(5) A rubber-modified aromatic vinyl resin composition having rubber particles dispersed in a continuous phase of an aromatic vinyl resin, wherein the rubber particles are in the form of a mixture of dotlike or rodlike particles and stringlike particles, the total content of the butadiene components in the resin composition amounts to 14 to 31 % by weight in the resin composition, and the weight ratio of the toluene insoluble matter to the total content of the butadiene components in the resin composition is in the range of from 0.1 to 1.8.

(6) A rubber-modified aromatic vinyl resin composition, comprising stringlike rubber particles that are blended in an amount of 16 to 70 parts by weight with 84 to 30 parts by weight of a rubber-modified aromatic vinyl resin composition that has dotlike or rodlike rubber particles and in which 3 to 25 % by weight of a rubber-like polymer has been added.

(7) The rubber-modified aromatic vinyl resin composition as stated in the above (5) or (6), wherein said stringlike particles are made of a styrene/butadiene/styrene triblock rubber.

As will be understood from the above, the present invention can be grouped roughly into two.

A first group, as represented by the above (1), is a rubber-modified aromatic vinyl resin composition comprising a rubbery elastomer in the form of particles having a specified particle diameter and a straight-chain, branched, or network rubbery elastomer having a specified thickness that are dispersed in an aromatic vinyl polymer (hereinafter referred to as the first invention).

A second group, as represented by the above (5), is a rubber-modified aromatic vinyl resin composition comprising a dotlike or rodlike rubbery elastomer component and a stringlike rubbery elastomer component that are present in a specified ratio in an aromatic vinyl polymer wherein the rubbery elastomer component is made of a butadiene rubber (hereinafter referred to as the second invention).

BRIEF DESCRIPTION OF THE DRAWINGS

Fig. 1 is a schematic diagram of the resin composition of the first invention based on a photograph (magnified 50,000 times) taken under a transmission electron microscope.

Fig. 2 is a photograph (magnified 50,000 times) of a cross section of a molded sheet item made of the resin composition of the first invention taken under a transmission electron microscope; the photograph at the left shows a cross section of a molded sheet item of Comparative Example 4; and the photograph at the right shows a cross section of a molded sheet item of Example 4.

Fig. 3 is a schematic diagram of the resin composition of the second invention based on a photograph (magnified 50,000 times) taken under a transmission electron microscope.

Fig. 4 is a photograph (magnified 50,000 times) of a cross section of a molded sheet item made of the resin composition of the second invention taken under a transmission electron microscope; the photograph at the left shows a cross section of a molded sheet item of Comparative Example (15); and the photograph at the right shows a cross section of a molded sheet item of Example (11).

DESCRIPTION OF THE PREFERRED EMBODIMENTS

Now, the present invention is described in detail.

(1) The subject resin composition

The rubber-modified aromatic resin composition subject to the present invention is a composition having a rubbery elastomer in the form of a disperse phase in a continuous phase of an aromatic vinyl polymer.

Such an aromatic vinyl polymer constituting a continuous phase is a polymer or a copolymer of an aromatic vinyl monomer and the aromatic vinyl monomer includes in addition to styrene, for example, a nucleus alkyl-substituted styrene, such as o-methylstyrene, m-methylstyrene, p-methylstyrene, 2,4-dimethylstyrene, ethylstyrene, and p-tert-butylstyrene, and an $\alpha$-alkyl-substituted styrene, such as $\alpha$-methylstyrene and $\alpha$-methyl-p-methylstyrene. Among these, preferably styrene and $\alpha$-methylstyrene are used, as a polymer, preferably a polystyrene is used, and, as a copolymer, preferably a copolymer of styrene and $\alpha$-methylstyrene is used.

Further, the rubbery elastomer forming a disperse phase is not particularly restricted with respect to the molecular weight, the degree of branching, or the like. The rubbery elastomer forming a disperse phase includes, specifically, a polybutadiene, a random copolymer or a block copolymer of styrene and butadiene, a random copolymer or a block

copolymer of $\alpha$-methylstyrene and butadiene, a random copolymer or a block copolymer of styrene and isoprene and its hydrogenated product, an ethylene/propylene rubber (EPR), an ethylene/propylene/diene rubber (EPDM), an acrylic rubber, and the like. Among these, a styrene/butadiene block copolymer is preferably used.

The usual proportion of the rubbery elastomer in the resin composition is in the range of 15 to 35 % in terms of the signal strength ratio measured by the pulse NMR measurement method described later.

### (2) The shape and the like of the rubbery elastomer component

In the rubber-modified aromatic vinyl resin composition of the present invention, the factors of the shape and the content of the rubbery elastomer component forming a disperse phase significantly influence the intended transparency and mechanical/physical properties, such as impact resistance and rigidity. The shape and the like of the rubbery elastomer component are observed under an electron microscope.

As an example of the first invention, the rubber-modified aromatic vinyl resin composition of the present invention is extruded under the below-given extrusion conditions into a sheet (0.5 mm in thickness) and the shapes and the like of the rubbery elastomer parts are observed:

Extrusion conditions:

| | |
|---|---|
| Extruder: | 65 mm-extruder manufactured by Hitachi Zosen Sangyo |
| Resin temperature: | about 200 °C |
| Discharge: | about 70 kg/hour |
| Take-off speed: | about 3.6 m/min |
| Die lip clearance: | 0.7 mm |
| Die lip width: | about 600 mm |
| Sheet thickness: | about 0.5 mm |

An ultrathin piece about 0.1 $\mu$m in thickness obtained by cutting the sheet in the orientation direction and vertical to the sheet surface (the cross section in the orientation direction is to be observed) is dyed with osmium tetraoxide and is magnified 50,000 times and photographed under a transmission electron microscope (abbreviated TEM) to be observed.

Using the TEM photograph, the image analysis is carried out.

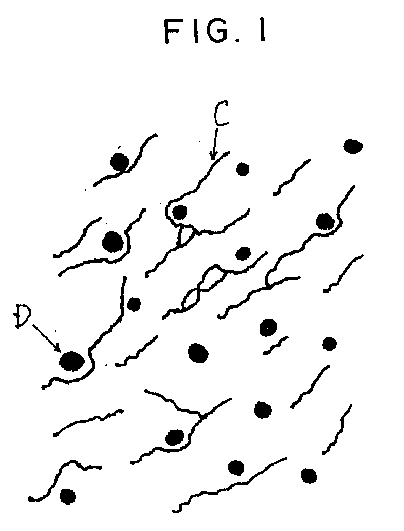

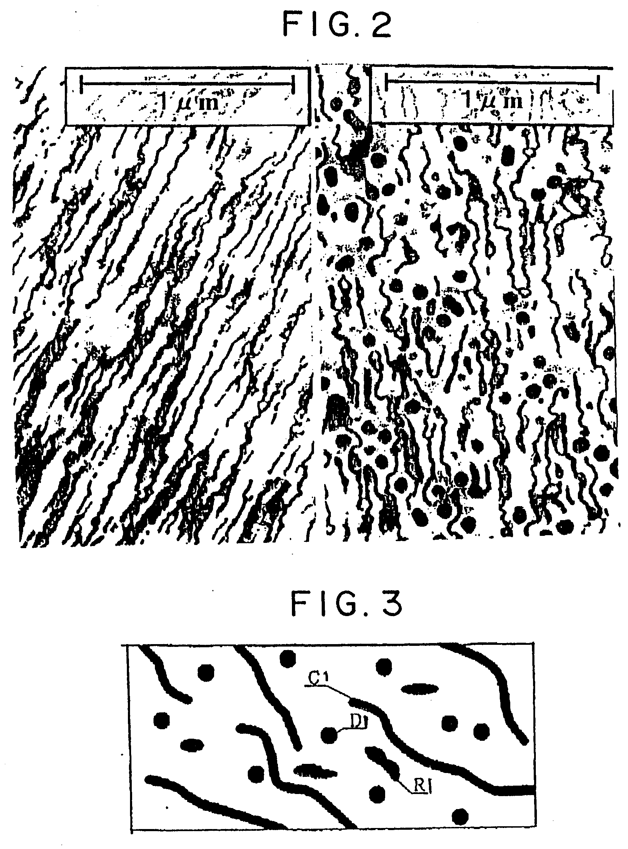

The TEM photograph of the resin composition of the first invention is shown, for example, on the right in Fig. 2. Fig. 1 shows a diagram illustrating schematically the photograph.

In the case of the image analysis of a TEM photograph obtained from the second invention, an orientated sheet obtained by extrusion is used as a sample. Taking as an example thereof, the rubber-modified aromatic vinyl resin composition of the present invention is extruded under the below-given extrusion conditions into a sheet (0.5 mm in thickness) and the shape and the like of the rubber-like elastic parts are observed:

Extrusion conditions:

| | |
|---|---|
| Extruder: | 35 mm-extruder manufactured by Shinko Kikai |
| Resin temperature: | about 230 °C |
| Discharge: | about 12 kg/hour |
| Take-off speed: | about 1.8 m/min |
| Die lip clearance: | 0.7 mm |
| Die lip width: | about 28 cm |
| Sheet thickness: | about 0.5 mm |

An ultrathin piece about 0.1 $\mu$m in thickness obtained by cutting the sheet in the orientation direction and vertical to the sheet surface (the cross section in the orientation direction is to be observed) is dyed with osmium tetraoxide, and is magnified 50,000 times and photographed under a transmission electron microscope (abbreviated to TEM) to be observed.

Using the TEM photograph, the image analysis is carried out.

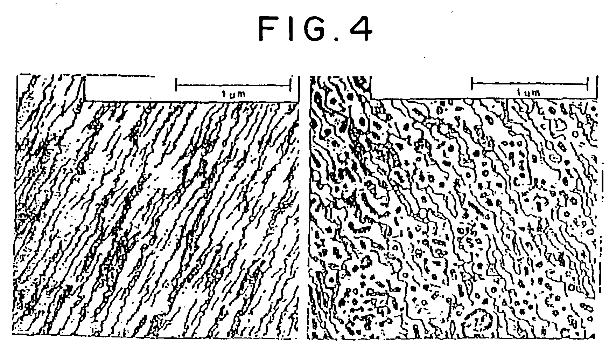

The TEM photograph of the resin composition of the second invention is shown, for example, on the right in Fig. 4. Fig. 3 shows a diagram illustrating schematically the photograph.

In passing, in the image analysis of TEM photographs obtained from the first invention, samples are not necessarily orientated sheets obtained by extrusion and may be resin pellets before being formed or may be press-molded items, injection-molded items or the like. That is, the image analysis based on the first invention is not influenced by molding conditions or the like of samples.

(2-1) Image analysis based on the first invention

As is shown in Fig. 2, in the TEM photograph, the aromatic vinyl polymer parts are observed as white images and the rubber-like elastic parts are observed as black images. In the resin composition of the first invention, the black images (rubbery elastomer components) are mainly in the shapes of particles and straight chains, branches, or networks. This image is explained based on the schematic diagram shown in Fig. 1 and the TEM photograph shown in Fig. 2.

The schematic diagram (Fig. 1) shows an example of the present invention illustrating schematically the shapes of the rubbery elastomer parts of the TEM photograph on the right in Fig. 2, the rubbery elastomer parts being mainly in the shapes of particles and straight chains, branches, or networks. In addition to thereto, the rubbery elastomer, for example, in the form resembling the pattern of a section of a salami (the aromatic vinyl polymer in the form of a number of particles dispersed in the rubbery elastomer in the shape of a circle) or in a single occlusion state (in the state wherein one body of the aromatic vinyl polymer is contained in the rubbery elastomer in the shape of a circle, i.e., in the state wherein one body of the aromatic vinyl polymer is surrounded by the rubbery elastomer) is allowed to exist in the range not impairing the effect of the present invention.

In order to investigate their sizes and the like in detail, the lengths and the like were measured using a digitizer based on the TEM photographs and calculated by a computer and the like to measure the factors of the shapes of the rubber components.

The rubbery elastomer parts in the form of particles of the first invention have a major diameter/minor diameter ratio (L/D) of from 1 to 2 and their surface mean particle diameter and the number of particles in a square area of 4 $\mu m^2$ are measured.

The straight-chain, branched, or network rubbery elastomer parts have a major diameter/minor diameter ratio (L/D) of over 2 and the average length and the total length thereof are measured in a square area of 4 $\mu m^2$.

The surface mean particle diameter ($D_s$) is found by measuring about 1000 particles and according to the following formula:

$$D_s = \frac{\Sigma niDi^3}{\Sigma niDi^2}$$

wherein ni denotes the number of particles having the diameter Di, which is the minor diameter.

The measurement of the number of particles is made by counting the number of particles having a L/D of from 1 to 2 in a square area of 4 $\mu m^2$.

With respect to the measurement of the average thickness of the straight-chain, branched, or network rubbery elastomer parts, the average value of the thicknesses observed at 10 points in a square area of 4 $\mu m^2$ is used and with respect to the total length, the sum obtained by adding the lengths of rubbery elastomer parts in said square area is used. That is, the total length is the sum of lengths obtained by measuring lengths of short straight chains and long straight chains, lengths of branches and trunks, and lengths of branches of networks.

In the rubber-modified aromatic vinyl resin composition of the first invention, it is necessary that the surface mean particle diameter of the rubbery elastomer parts having a major diameter/minor diameter ratio of from 1 to 2 is 0.1 $\mu m$ or less and that the average thickness of the straight-chain, branched, or network rubbery elastomer parts is 0.04 $\mu m$ or less. If the above surface mean particle diameter is over 0.1 $\mu m$, the transparency is deteriorated, and if the above average thickness is over 0.04 $\mu m$, the transparency is deteriorated.

The rubber-modified aromatic vinyl resin composition having such properties and its molded product have physical properties excellent in balance between transparency and impact resistance.

Further, it is desirable that the number of particles having a major diameter/minor diameter ratio of from 1 to 2 in a square area of 4 $\mu m^2$ is 40 or more and that the total length of the straight-chain, branched, or network rubbery elastomer parts in said square area is 20 $\mu m$ or more.

That is because the more increased the number of the particles is, the more improved the impact resistance and the transparency are, and the longer the total length of the straight-chain, branched, or network rubbery elastomer parts is, the more improved the impact resistance and the transparency are.

The total content of the components of the rubber-like product is desirably within a specified range measured by pulse NMR. Specifically the measurement is based on free induction decay. Using a pulse NMR apparatus, the hydrogen nuclei are used as measurement nuclei and the signal strength immediately after irradiation with solid echo pulses (90° x-$\tau$-90° by pulses) at 30 °C is measured, and it is assumed to be 100 %. Further, the signal strength 60 $\mu s$ after the irradiation is measured and the ratio thereof to the value immediately after the irradiation is found. If that ratio is in the range of 15 to 35 %, the particular rubber-modified aromatic vinyl resin composition and its molded product are most well balanced in transparency, impact resistance, and rigidity and the anisotropy is well suppressed.

Therefore, in the components of the rubbery elastomer, in addition to components in the shapes of particles and straight chains, or networks, other components, for example, in the form resembling the pattern of a section of a salami or in a single occlusion state mentioned above may be contained if the total content is within the above range.

(2-2) Image analysis based on the second invention

As is described above, Fig. 3 (a diagram) is a schematic illustration based on the image of a TEM photograph of a sheet sample wherein a rubber-modified aromatic resin composition in which a butadiene polymer is used as a component of a rubbery elastomer is stretched and orientated.

The diagram (Fig. 3) shows schematically the shapes of the rubber particles of the right photograph of the TEM photographs (Fig. 4), which shapes comprise mainly three shapes, i.e., dotlike shapes, rodlike shapes, and stringlike shapes. The length or the major diameter of the whole rubber component is designated L (if the component is curved the length is measured along its course and if the component is branched, the length of the main chain is measured), and the thickness or the minor diameter is designated D. The measurement is carried out by using a planimeter in the length mode measurement mode. The above shapes of the particles are defined by these L and D and the surface mean particle diameter ($D_s$) of the rubber particles made up of dotlike particles and rodlike particles is calculated.

The term "dotlike particles" refers to rubber particles having an L/D of from 1 to 1.2.

The term "rodlike particles" refers to rubber particles having an L/D of 1.2 or more and a D of 0.04 $\mu$m or more.

The term "stringlike particles" refers to rubber particles having an L/D of 1.2 or more and a D of less than 0.04 $\mu$m.

The surface mean particle diameter ($D_s$) is calculated according to the following formula:

$$D_s = \frac{\Sigma niDi^3}{\Sigma niDi^2}$$

wherein ni denotes the number of particles having the diameter Di. The number of measured particles is about 1,000.

With respect to the particle diameter Di, L is used for dotlike particles and D is used for rodlike particles.

In the second invention, preferably the surface mean particle diameter of dotlike rubber particles and rodlike rubber particles is 0.1 $\mu$m or less in view of transparency. Preferably the average of L/D of stringlike particles is 10 or more in view of impact resistance. In passing, the average of L/D is the average with the number of measured particles being about 1,000.

The constitution related to the shapes of the rubber particles of the second invention has been described above. The constitution related to the total content of the rubber components to be added and the content of the stringlike component to be added out of the rubber components is now described. The restriction of the below-shown ranges of the amounts to be added and the ratio of the amounts to be added is narrow in comparison with the specified ranges measured by pulse NMR explained in the first invention and the physical properties exhibited by the resin composition of the second invention are more preferable. The mixing rate of all the butadiene components in

the rubber-modified resin composition is generally 14 to 31 % by weight and preferably 20 to 28 % by weight measured by the $^{13}$C-NMR spectral method. If the mixing rate is less than 14 % by weight, the impact resistance is lowered whereas if the mixing rate is 31 % by weight or more, it is observed that the rigidity is lowered and the anisotropy is increased.

For the component in the form of dotlike particles and the rodlike particles that constitute the rubber particles having various shapes, a polybutadiene, a styrene/butadiene copolymer, and a styrene/butadiene random polymer are preferably used, and for the stringlike particles, a styrene/butadiene/styrene triblock rubber is preferably used. Thus, a butadiene component is contained in all of the rubber particles and that amount was shown in the value specified from a sample cut out from a molded sheet item by the $^{13}$C-NMR spectral method.

The specific measuring method is as follows:

A 0.4-g sample is taken into an NMR sample tube having a diameter of 10 mm, 3 ml of deuterochloroform is added to dissolve it at room temperature, and then the $^{13}$C-NMR spectrum is measured. NMR measuring conditions: 400 MHzNMR manufactured by LEOL Ltd.; pulse width: 8 $\mu$s (45°); pulse repetition period: 4 sec; number of accumulated times: 1,000; temperature at which the measurement is carried out: room temperature; chemical shift standard: out of the three peaks of deuterochloroform, the central peak is designated 76.91 ppm. Letting the strength of the carbon peak (47.0 to 39.0 ppm) of CH, $CH_2$ attributed to styrene be A, the sum of the strengths of the CH, $CH_2$ carbon peaks (around 142.6, 114.3 ppm) of 1.2-vinyl of butadiene be B, the strength of the peak (around 32.7 ppm) of the 1.4-trans methylene carbon be C, and the strength of the peak (around 27.3 ppm) of the 1.4-cis methylene carbon be D, the butadiene content is calculated according to the following formula:

$$\text{Butadiene content (wt. \%)} = \frac{54(B + C + D)}{104A + 54(B + C + D)} \times 100$$

Then, the ratio (-) of the toluene insoluble matter (wt. %) to the total content of butadiene components (wt. %) (value specified by the $^{13}$C-NMR spectral method) is $0.1 \leqq$ toluene insoluble matter/total content of butadiene components $\leqq$ 1.8.

If the toluene insoluble matter/total content of butadiene components is less than 0.1, the molded sheet item becomes high in anisotropy whereas if the toluene insoluble matter/total content of butadiene components is over 1.8, the balance between the impact resistance and the transparency is lowered.

It is considered that the toluene insoluble matter is a crosslinked product of the rubber components with the aromatic vinyl component and constitutes the dotlike particles and rodlike particle while the stringlike particles dissolve in toluene. Therefore, the above formula implies that dotlike particles and rodlike particles exist and the amount of stringlike particles is extremely small.

The method of measuring toluene insoluble matter is as follows:

A sample in an amount of Wc (g) is dissolved in toluene, the solution is centrifuged at room temperature for 90 min at 15,000 rpm, the supernatant liquid is decanted, and the swelled insoluble matter is dried and weighed (Ws g):

$$\text{Toluene insoluble matter} = (Ws/Wc) \times 100 \ (\text{wt. \%})$$

### (3) Preparation of the rubber-modified aromatic vinyl resin composition

### (3-1) Preparation of the rubber-modified aromatic vinyl resin composition of the first invention

The rubber-modified aromatic vinyl resin composition of the first invention can, for example, be obtained by blending the three components as follows:

That is, the rubber-modified vinyl resin composition comprises 30 to 80 % by weight of a component (A) shown below, 10 to 70 % by weight of a component (B) shown below, and 0 to 15 % by weight of a component (C) shown below.

A component (A): a rubber-modified aromatic vinyl resin composition comprising a rubbery elastomer in the form of particles having a major diameter/minor diameter ratio of from 1 to 2 dispersed in a matrix made of an aromatic vinyl resin, said rubbery elastomer amounting 3 to 25 % by weight and the surface mean particle diameter thereof being 0.1 $\mu$m or less;

A component (B): a thermoplastic block copolymer made up of 55 to 85 % by weight of an aromatic vinyl compound and 15 to 45 % by weight of a conjugated diene compound; and

A compound (C): a thermoplastic block copolymer made up of 10 to 50 % by weight of an aromatic vinyl compound and 50 to 90 % by weight of a conjugated diene compound.

The components (A), (B), and (C) can be produced in the following ways:

### (3-1-1) With respect to the component (A)

The component (A) is a rubber-modified aromatic vinyl resin composition comprising a rubbery elastomer in the form of particles having a major diameter/minor diameter ratio of from 1 to 2 dispersed in a matrix made of an aromatic vinyl resin, said rubbery elastomer amounting 3 to 25 % by weight and the surface mean particle diameter thereof being 0.1 $\mu$m or less.

The rubber-modified aromatic vinyl resin composition is a composition wherein a disperse phase of the rubbery elastomer is formed in a continuous phase of the aromatic vinyl polymer.

The aromatic vinyl polymer constituting such a continuous phase is a polymer or a copolymer of an aromatic vinyl monomer and the aromatic vinyl monomer includes in addition to styrene, for example, a nucleus alkyl-substituted styrene, such as o-methylstyrene, m-methylstyrene, p-methylstyrene, 2,4-dimethylstyrene, ethylstyrene, and p-tert-butyl-styrene, and an $\alpha$-alkyl-substituted styrene, such as $\alpha$-methylstyrene and $\alpha$-methyl-p-methylstyrene. Among these, preferably styrene and $\alpha$-methylstyrene are used, as a polymer, preferably a polystyrene is used, and, as a copolymer, preferably a copolymer of styrene and $\alpha$-methylstyrene is used.

Further, the rubbery elastomer forming a disperse phase is not particularly restricted with respect to the molecular weight, the degree of branching, or the like. Any substance showing rubber-like properties at room temperature can be used. The rubbery elastomer forming a disperse phase includes, specifically, a polybutadiene, a random copolymer or a block copolymer of styrene and butadiene, a random copolymer or a block copolymer of $\alpha$-methylstyrene and butadiene, a random copolymer or a block copolymer of styrene and isoprene and its hydrogenated product, an ethylene/propylene rubber (EPR), an ethylene/propylene/diene rubber (EPDM), an acrylic rubber, and the like. Among these, a styrene/butadiene block copolymer is preferably used.

The amount of the rubbery elastomer to be added is generally 3 to 25 % by weight and preferably 5 to 20 % by weight. If the amount exceeds 25 % by weight, the viscosity of the aromatic vinyl monomer solution in which the rubbery elastomer is dissolved is increased, which is unpreferable because the handling becomes difficult, the pressure in the reaction vessel is increased, and the productivity is lowered. If the amount is less than 3 %, the manifestation of the transparency and the impact resistance is unsatisfactory. The adjustment of the amount of the rubbery elastomer to be added can be effected, for example, by adjusting the amount to be added at the stage wherein the rubbery elastomer is dissolved in the aromatic vinyl monomer before the polymerization, or by removing the monomer under heat and reduced pressure at the stage wherein the degree of polymerization conversion is low.

To polymerize using the aromatic vinyl monomer and the rubbery elastomer, generally, the mass polymerization, the mass/suspension polymerization, the solution polymerization, the emulsion polymerization, or the like by the radical polymerization is carried out, and preferably a method is used wherein the rubbery elastomer is dissolved in the aromatic vinyl monomer and the mass polymerization, the mass/suspension polymerization, or the solution polymerization is carried out. Specifically, it is suggested that by mass pre-polymerization the rubbery elastomer is dispersed to have a prescribed surface mean particle diameter, then the mass polymerization, the solution polymerization, or the suspension polymerization is carried out to complete the intended polymerization.

In passing, a polymerization initiator is used in the pre-polymerization stage to control the rubber particles to have a surface mean particle diameter of 0.1 $\mu$m or less. The amount of the polymerization initiator to be added varies depending on the species of rubber and for example in the case of a styrene/butadiene block copolymer, the amount of the polymerization initiator to be added is of the order of 300 to 400 ppm based on the total amount of the rubber and the aromatic vinyl monomer.

The polymerization initiator is not only effective to control the rubber particle diameter but also effective, for example, to improve the reaction rate and the graft rate and to suppress the production of oligomers.

As the polymerization initiator, can be mentioned peroxyketals, such as 1,1-bis(t-butylperoxy)cyclohexane and 1,1-bis(t-butylperoxy)3,3,5-trimethylcyclohexane, dialkyl peroxides, such as dicumyl peroxide, di-t-butyl peroxide, and 2,5-dimethyl-2,5-di(t-butylperoxy)hexane, diaryl peroxides, such as benzoyl peroxide and m-toluoyl peroxide, peroxydicarbonates, such as dimyristyl peroxydicarbonate, peroxyesters, such as t-butyl peroxypivalate and t-butyl peroxyisopropyl carbonate, ketone peroxides, such as cyclohexanone peroxide, and hydroperoxides, such as p-methane hydroperoxide.

The weight-average molecular weight of the aromatic vinyl polymer that forms a continuous phase obtained by this polymerization is 100,000 to 300,000 and preferably 130,000 to 250,000. If the weight-average molecular weight is less than 100,000, the impact resistance is unsatisfactory whereas if the weight-average molecular weight is over 300,000, such problems arise that the viscosity in the later stage of the polymerization is increased too much and therefore the control becomes difficult.

The control of the molecular weight is effected, for example, by adjusting the amount of a molecular weight modifier (chain transfer agent) or adjusting the reaction temperature. That is, when the amount of the molecular weigh modifier to be added is decreased, the molecular weight can be increased whereas when the amount of the molecular weight modifier to be added is increased, the molecular weight can be decreased. When the polymerization is carried out at a high temperature, the molecular weight can be decreased whereas when the polymerization is carried out at a low temperature, the molecular weight can be increased. Incidentally, the amount of the molecular weight modifier also affects the rubber particle diameter, but by adding the molecular weight modifier after the phase transition of the rubber, only the molecular weight can be controlled without affecting the rubber particle diameter.

Additionally stated, the molecular weight modifier includes $\alpha$-methylstyrene dimer, mercaptans, terpens, and halogen compounds, such as n-dodecyl mercaptan, t-dodecyl mercaptan, 1-phenylbutene-2-fluorene, dipentene, and chloroform.

### (3-1-2) With respect to the component (B)

The component (B) is a thermoplastic block copolymer made up of 55 to 85 % by weight of an aromatic vinyl compound and 15 to 45 % by weight of a conjugated diene compound.

Specifically, for example, styrene/butadiene block copolymers, and out of them, high-styrene-containing copolymers whose styrene content is 55 to 85 % by weight are preferable in view of the transparency.

The measurement of the aromatic vinyl compound content of the thermoplastic block copolymer is carried out by $^1$H-NMR. The details are shown below.

0.02 g of a sample is taken into an NMR sample tube having an inner diameter of 5 mm, 0.6 ml of deuterochloroform is added to dissolve it uniformly at room temperature, and the $^1$H-NMR spectrum is measured. The NMR measurement conditions are as follows: 400 MHzNMR manufactured by JEOL Ltd.; pulse repetition period: 9 sec; number of accumulated times: 32; pulse width: 8 $\mu$s; temperature at which the measurement is carried out: room temperature; chemical shift standard: tetramethylsilane. In the $^1$H-NMR spectrum, letting the integral strength of the peak (7.45 to 6.00 ppm) attributed to the aromatic ring proton of styrene be A, the integral strength of the peak (5.73 to 5.14) attributed to the CH double bond proton of butadiene be B, and the integral strength of the peak (5.14 to 4.80 ppm) attributed the $CH_2$ double bond proton of butadiene be C, the styrene content can be calculated according to the following formula:

$$\text{Styrene content (wt. \%)} = \frac{104 \times (A/5)}{104 \times (A/5) + 54((2B + C)/4)} \times 100$$

The styrene/butadiene block copolymer is generally represented by (S-B)n, S(S-B)n, S(B-S)n, -(S-B)n-X, or the like wherein S stands for a styrene block, B stands for a butadiene block, X stands for the residue of a coupling agent, and n is an integer.

In the polymerization, monomers, such as 1,3-butadiene and styrene, are used as major components, as a catalyst, an organolithium compound, such as ethyllithium, n-butyllithium, and stearyllithium, is used, and preferably the styrene content is to be 50 to 99 % by weight. For that, known methods can be used such as those methods described, for example, in Japanese Patent Publication Nos. 19286/1961, 14979/1968, 2423/1973, 4106/1973, and 36957/1974.

### (3-1-3) With respect to the component (C)

The component (C) is a thermoplastic block copolymer made up of 10 to 50 % by weight of an aromatic vinyl compound and 50 to 90 % by weight of a conjugated diene compound.

Whereas the component (B) is a copolymer high in the content of an aromatic vinyl compound, the component (C) is different from that in that the component (C) is a copolymer low in the content of an aromatic vinyl compound, and the component (C) improves mainly impact resistance. With respect to other points, the component (C) is similar to the component (B) and therefore can be produced in accordance with the above-described method for the component (B).

The above respective components are used to obtain the rubber-modified aromatic vinyl resin composition which is a blend of 30 to 80 % by weight of the component (A), 10 to 70 % by weight of the component (B), and 0 to 15 % by weight of the component (C). Further, if necessary, various fillers and additives may be blended in the ranges wherein the substantial effect of the present invention is not impaired.

### (3-2) Preparation of the rubber-modified aromatic vinyl resin composition of the second invention

The rubber-modified aromatic vinyl resin composition of the second invention can be produced by blending 84 to 30 parts by weight of a rubber-modified aromatic vinyl resin composition (a) that has dotlike or rodlike rubber particles wherein a rubber-like polymer has been added in an amount of 3 o 25 % by weight with 16 to 70 parts by weight of stringlike rubber particles (b).

### (3-2-1) The rubber-modified aromatic vinyl resin composition (a)

The rubber-modified aromatic vinyl resin composition (a) used in the production of the resin composition of the second invention has dotlike or rodlike rubber particles. Desirably the rubber particles are butadiene rubber particles having a surface mean average particle diameter of 0.1 $\mu$m or less. The rubber-modified aromatic vinyl resin composition (a) can be produced by dissolving 3 to 25 % by weight of a rubber-like polymer in an aromatic vinyl monomer and carrying out the radical polymerization.

The rubber-modified aromatic vinyl resin composition (a) is a composition wherein a disperse phase of a rubber-like polymer is formed in a continuous phase of an aromatic vinyl polymer.

The aromatic vinyl polymer constituting such a continuous phase is a polymer or a copolymer of an aromatic vinyl monomer and the aromatic vinyl monomer includes in addition to styrene, for example, a nucleus alkyl-substituted styrene, such as o-methylstyrene, m-methylstyrene, p-methylstyrene, 2,4-dimethylstyrene, ethylstyrene, and p-tert-butyl-styrene, and an $\alpha$-alkyl-substituted styrene, such as $\alpha$-methylstyrene and $\alpha$-methyl-p-methylstyrene. Among these, preferably styrene and $\alpha$-methylstyrene can be used, as a polymer, preferably a polystyrene can be used, and, as a copolymer, preferably a copolymer of styrene and $\alpha$-methylstyrene can be used.

Further, the rubber-like polymer forming a disperse phase is not particularly restricted with respect to the molecular weight and the degree of branching. Any substance showing rubber-like properties at room temperature can be used. The rubber-like polymer forming a disperse phase includes, specifically, a polybutadiene, a random copolymer or a block copolymer of styrene and butadiene, a random copolymer or a block copolymer of $\alpha$-methylstyrene and butadiene, a random copolymer or a block copolymer of styrene and isoprene and its hydrogenated product, an ethylene/propylene rubber (EPR), an ethylene/propylene/diene rubber (EPDM), an acrylic rubber, and the like. Among these, a styrene/butadiene block copolymer is preferably used.

The amount of the rubber-like polymer to be added is generally 3 to 25 % by weight and preferably 5 to 20 % by weight. If the amount exceeds 25 % by weight, the viscosity of the aromatic vinyl monomer solution in which the rubber-like polymer is dissolved is increased, which is unpreferable because the handling becomes difficult, the pressure in the reaction vessel is increased, and the productivity is lowered. If the amount is less than 3 %, the manifestation of the impact resistance is unsatisfactory. The adjustment of the amount of the rubber-like polymer to be added can be effected by adjusting the amount to be added at the stage wherein the rubber-like polymer is dissolved in the aromatic vinyl monomer before the polymerization, or by removing the monomer under heat and reduced pressure at the stage wherein the degree of polymerization conversion is low.

Then, to polymerize using the aromatic vinyl monomer and the rubber-like polymer, generally, the mass polymerization, the mass/suspension polymerization, the solution polymerization, the emulsion polymerization, or the like by the radical polymerization is carried out, and preferably a method is used wherein the rubber-like polymer is dissolved in the aromatic vinyl monomer and the mass polymerization, the mass/suspension polymerization, or the solution polymerization is carried out. Specifically, it is suggested that by mass pre-polymerization the rubber-like polymer is dispersed to have a prescribed surface mean particle diameter, then the mass polymerization, the solution polymerization, or the suspension polymerization is carried out to complete the intended polymerization. In this mass pre-polymerization, generally, the polymerization temperature is 70 to 130 °C and preferably 90 to 120 °C and the polymerization conversion is 15 to 45 % and thereafter the intended polymerization is carried out by suspension polymerization at a polymerization temperature of 70 to 180 °C and preferably 80 to 160 °C to complete the polymerization.

In passing, a polymerization initiator is used in the pre-polymerization stage to control the rubber particles to have a surface mean particle diameter of 0.1 $\mu$m or less. The amount of the polymerization initiator to be added varies depending on the species of rubber and for example in the case of a styrene/butadiene block copolymer, the amount of the polymerization initiator to be added is of the order of 300 to 400 ppm based on the total amount of the rubber and the aromatic vinyl monomer and in the case of a polybutadiene rubber, the amount of the polymerization initiator to be added is of the order of 500 ppm based on the total amount of the rubber and the aromatic vinyl monomer.

The polymerization initiator is not only effective to control the rubber particle diameter but also effective, for example, to improve the reaction rate and the graft rate and to suppress the production of oligomers.

As the polymerization initiator, can be mentioned peroxyketals, such as 1,1-bis(t-butylperoxy)cyclohexane and 1,1-bis(t-butylperoxy)3,3,5-trimethylcyclohexane, dialkyl peroxides, such as dicumyl peroxide, di-t-butyl peroxide, and 2,5-dimethyl-2,5-di(t-butylperoxy)hexane, diaryl peroxides, such as benzoyl peroxide and m-toluoyl peroxide, peroxydicarbonates, such as dimyristyl peroxydicarbonate, peroxyesters, such as t-butyl peroxypivalate and t-butyl peroxyisopropyl carbonate, ketone peroxides, such as cyclohexanone peroxide, and hydroperoxides, such as p-methane hydroperoxide.

The weight-average molecular weight of the aromatic vinyl polymer that forms a continuous phase obtained by this polymerization is 100,000 to 300,000 and preferably 130,000 to 250,000. If the weight-average molecular weight is less than 100,000, the impact resistance is unsatisfactory whereas if the weight-average molecular weight is over 300,000, the viscosity in the later stage of the polymerization is increased too much and therefore the control becomes difficult.

The control of the molecular weight is effected by adjusting the amount of a molecular weight modifier (chain transfer agent). That is, when the amount of the molecular weigh modifier to be added is decreased, the molecular weight can be increased whereas when the amount of the molecular weight modifier to be added is increased, the molecular weight can be decreased. When the polymerization is carried out at a high temperature, the molecular weight can be decreased whereas when the polymerization is carried out at a low temperature, the molecular weight can be increased. Incidentally, the amount of the molecular weight modifier also affects the rubber particle diameter, but by adding the molecular weight modifier after the phase transition of the rubber, only the molecular weight can be controlled without affecting the rubber particle diameter.

Additionally stated, the molecular weight modifier includes $\alpha$-methylstyrene dimer, mercaptans, terpens, and halogen compounds, such as n-dodecyl mercaptan, t-dodecyl mercaptan, 1-phenylbutene-2-fluorene, dipentene, and chloroform.

### (3-2-2) The stringlike rubber particles (b)

A representative example of the stringlike rubber particles (b) used in the production of the resin composition of the second invention is particles of a styrene/butadiene/styrene triblock rubber and particularly a styrene/butadiene/styrene triblock rubber wherein a high-styrene-containing rubber having a styrene content of 50 to 99 % by weight amounts to 50 % by weight or more is preferable in view of the transparency.

The styrene/butadiene/styrene triblock rubber is usually called an SBS block copolymer rubber and generally one of SB block copolymers represented by (S-B)n, S(S-B)n, S(B-S)n, -(S-B)n-X, or the like wherein S stands for a styrene block, B stands for a butadiene block, X stands for the residue of a coupling agent, and n is an integer, that is, a block copolymer having an arrangement of S-B-S.

In the polymerization, monomers, such as 1,3-butadiene and styrene, are used as major components, as a catalyst (initiator), an organolithium compound, such as ethyllithium, n-butyllithium, and stearyllithium, is used, and preferably the styrene content is to be 50 to 99 % by weight. For that, known methods can be used such as those methods described, for example, in Japanese Patent Publication Nos. 19286/1961, 14979/1968, 2423/1973, 4106/1973, and 36957/1974.

(3-3) Blending and the like of the Components

The blending of the respective components in the production of the resin compositions of the first invention and the second invention may use a method wherein all the components are simultaneously charged in a mixer and are mixed, or a method wherein parts of the components are previously mixed and the remaining parts are kneaded. Specifically, the respective components are dryblended using a Henschel mixer, and then the mixture is kneaded in a double-screw extruder at a cylinder temperature of 200 to 280 °C and is pelletized.

Incidentally, as various fillers, for example, inorganic fillers, such as glass fiber, carbon fiber, glass beads, micro-beads, talk, calcium carbonate, and mica and reinforcing fibers, such as polyester fiber and aramid fiber can be mentioned, and as additives, for example, phenolic acid type antioxidants, phosphoric acid type antioxidants, ultraviolet absorbers, antistatic agents, releasers, plasticizers, and pigments can be mentioned.

Due to the resin characteristics excellent in balance between transparency and impact resistance, the resin composition of the present invention can be favorably molded by various molding methods, such as injection molding, injection blow molding, blow molding, biaxial orientation blow molding, and extrusion, and can be preferably used particularly for various molded sheet items, such as beverage cups, packs for eggs and bean curd, lids, and trays for meat and fish by making good use of the transparency and good mechanical/physical properties (high impact resistance and high rigidity) as well as the excellent fabricability with less anisotropy.

Thus, the sheet physical properties of the resin composition of the present invention are characterized in that the transparency and the balance between impact resistance and rigidity are good and the anisotropy is small in comparison with the prior art one having the same transparency and impact resistance. Particularly, because the sheets (Examples 1, 2, and 4 shown below) wherein a styrene/butadiene block polymer is blended with a rubber-modified aromatic vinyl resin which is poor in transparency in comparison with GPPS are good in transparency (low in haze) in comparison with the sheets (Comparative Examples 3 and 4 shown below) wherein a styrene/butadiene block copolymer is blended with GPPS that is inherently good in transparency, the sheets (Examples, 1, 2, and 4) are excellent sheets suitable for transparent containers.

Now, the present invention is described with reference to Examples in detail.

Examples based on the first invention and Comparative Examples

[Method of Preparation of the Component (A)]

Preparation Example 1

A styrene/butadiene block copolymer (BUNA BL 6533 manufactured by Bayer AG) was dissolved in styrene to prepare a 15-wt. % solution. Further, into this rubber solution, 500 ppm of an antioxidant (Irganox manufactured by Ciba-Geigy), 400 ppm of a polymerization initiator, i.e., 1,1-bis(t-butylperoxy)-3,3,5-trimethylcyclohexane), and 100 ppm of a molecular weight modifier (chain transfer agent), i.e., n-dodecyl mercaptan were dissolved.

This rubber solution was fed into a complete mixing tank type first polymerization vessel having an internal volume of 21 liters at 20 liter/hour and was subjected to a prepolymerization at a polymerization temperature of 102 °C until the styrene conversion reached 8 %.

Then the polymerization liquid was fed into a complete mixing tank type second polymerization vessel having an internal volume of 21 liters and was polymerized at a polymerization temperature of 106 °C until the styrene conversion reached 20 %.

Next, the polymerization liquid was fed into a multi-paddle blade tower type reactor (third polymerization vessel) having an internal volume of 33 liters together with an ethylbenzene solution at a rate of 0.5 liter/hour, which ethylbenzene solution had contained n-dodecyl mercaptan therein in an amount of 100 ppm based on the polymerization liquid, and the polymerization was carried out at a reaction temperature of 130 °C until the styrene conversion reached 50 %.

Next the polymerization liquid is fed into a tower type reactor (fourth reactor) having the same shape as the third polymerization vessel and the polymerization was carried out at a reaction temperature of 165 °C until the styrene conversion reached 90 % by weight.

The final polymerization liquid was fed to a step of removing volatile materials, and thus volatile materials were removed in a flush drum under vacuum, followed by pelletizing by an attached extruder.

The obtained pellets were formed into a sheet under the above-described conditions, an ultrathin piece about 0.1 $\mu$m in thickness obtained by cutting the sheet was magnified 50,000 times and photographed under a transmission electron microscope, and the image analysis of the photograph was carried out to find the surface mean particle diameter of rubber particles dispersed in the matrix. The above-described signal strength was determined from the obtained pellets by pulse NMR.

The results of the measurement and other things are shown in Table 1.

Preparation Example 2

The production in Preparation Example 1 was repeated, except that the styrene/butadiene block copolymer (BUNA BL 6533 manufactured by Bayer AG) was dissolved in styrene to obtain a solution having a concentration of 9 % by weight and the amount of the n-dodecyl mercaptan dissolved in the rubber solution in the first reaction was 200 ppm.

With respect to the obtained pellets, in the same way as in Preparation Example 1, the image analysis was carried out and the properties were analyzed by pulse NMR. The results of the measurement and other things are shown in Table 1.

Preparation Example 3

The production in Preparation Example 1 was repeated, except that the polymerization initiator, 1,1-bis(t-butylperoxy)-3,3,5-trimethylcyclohexane, was used in an amount of 100 ppm.

With respect to the obtained pellets, in the same way as in Preparation Example 1, the image analysis was carried out and the properties were analyzed by pulse NMR. The results of the measurement and other things are shown in Table 1.

Preparation Example 4

Into styrene were dissolved an antioxidant (Irganox 245 manufactured by Ciba-Geigy) in an amount of 500 ppm and a polymerization initiator, 1,1-bis(t-butylperoxy)-3,3,5-trimethylcyclohexane in an amount of 100 ppm.

The solution was fed into a complete mixing tank type first polymerization vessel having an internal volume of 21 liters at a rate of 20 liters/hour and the polymerization was carried out at a polymerization temperature of 130 °C until the styrene conversion reached 23 %.

Next the polymerization liquid was fed into a multi-paddle blade tower type reactor (third polymerization vessel) having an internal volume of 33 liters and the polymerization was carried out at a reaction temperature of 145 °C until the styrene conversion reached 65 %.

Then, the polymerization liquid was fed into a tower type reactor (fourth reactor) having the same shape as the third polymerization vessel and the polymerization was carried out at a reaction temperature of 160 °C until the styrene conversion reached 90 % by weight.

The final polymerization liquid was fed to a step of removing volatile materials, and thus volatile materials were removed in a flush drum under vacuum, followed by pelletizing by an attached extruder.

Table 1

| Preparation Examples of HIPS as Component (A) | | | | |
|---|---|---|---|---|
| Preparation Example | 1 | 2 | 3 | 4 |
| Rubber species[*1] | BL 6533 | BL 6533 | BL 6533 | - |
| Amount of charged rubber (%) | 15 | 9 | 15 | 0 |
| Final conversion (%) | 90 | 90 | 90 | 90 |
| Polymerization initiator[*2] (ppm) | 400 | 400 | 100 | 100 |
| Chain transfer agent[*3] (ppm) | 100 | 200 | 100 | 0 |
| Chain transfer agent[*4] (ppm) | 100 | 100 | 100 | 0 |
| Pulse signal strength (%) | 14.3 | 8.58 | 14.5 | - |
| Surface mean particle diameter ($\mu$m) | 0.078 | 0.067 | 0.22 | - |
| Molecular weight (x $10^4$) | 16.6 | 17.9 | 18.5 | 24.5 |

*1 Rubber species: BUNA BL 6533 manufactured by Bayer AG (styrene/butadiene diblock copolymer)
*2 Polymerization initiator: 1,1-bis(t-butylperoxy)3,3,5-trimethylcyclohexane (charged into the first reactor)
*3 Chain transfer agent: normal dodecyl mercaptan (charged into the first reactor)
*4 Chain transfer agent: normal dodecyl mercaptan (charged into the third reactor)

[The Component (B)]

As the component (B), "Asaflex 810" (manufactured by Asahi Chemical Industry Co., Ltd.; styrene content measured by the $^1$H-NMR method: about 70 % by weight) was used.

[The Component (C)]

As the component (C), "Toughprene 125" (manufactured by Asahi Chemical Industry Co., Ltd.; styrene content measured by the $^1$H-NMR method: about 40 % by weight) was used.

Example 1

65 parts by weight of the one produced in Preparation Example 1 as the component (A), 30 parts by weight of the component (B), and 5 parts by weight of the component (C) were mixed in a tumbling barrel and the mixture was extruded by an extruder having a bore diameter of 65 mm at a resin temperature of 200 °C into a sheet 0.5 mm in thickness. An ultrathin piece about 0.1 $\mu$m in thickness was cut out from the sheet and was magnified 50,000 times and photographed under a transmission electron microscope, and the image analysis was carried out by the above-described method to find the surface mean particle diameter and the number of the rubbery elastomer parts in the form of particles having a major diameter/minor diameter varying from 1 to 2 dispersed in the matrix and the thickness and total length of the straight-chain, branched, and network rubber-like elastic parts. A test piece having a suitable size was cut out from the sheet and was used to find the signal strength 60 $\mu$s after the pulse irradiation by the free induction decay measurement by the pulse NMR method.

Further the physical properties including the transparency (haze: JIS K-7105), the impact resistance (Du Pont shock strength: JIS K-7211), the rigidity (tensional modulus: JIS K-7113), and the anisotropy (TD/MD: ratio of the tensional modululi) were evaluated. The results of the measurement and other things are shown in Table 2.

Example 2

Example 1 was repeated, except that 50 parts by weight of the one produced in Preparation Example 1 as the component (A) and 50 parts by weight of the component (B) were kneaded without using the component (C).

The measurement and evaluation were carried out in the same way as in Example 1. The results of the measurement and other things are shown in Table 2.

Example 3

Example 1 was repeated, except that 30 parts by weight of the one produced in Preparation Example 2 as the component (A), 60 parts by weight of the component (B), and 10 parts by weight of the component (C) were kneaded.

The measurement and evaluation were carried out in the same way as in Example 1. The results of the measurement and other things are shown in Table 2.

Example 4

Example 1 was repeated, except that 65 parts by weight of the one produced in Preparation Example 2 as the component (A), 30 parts by weight of the component (B), and 5 parts by weight of the component (C) were kneaded.

The measurement and evaluation were carried out in the same way as in Example 1. The results of the measurement and other things are shown in Table 2.

Example 5

Example 1 was repeated, except that 80 parts by weight of the one produced in Preparation Example 2 as the component (A), 15 parts by weight of the component (B), and 5 parts by weight of the component (C) were kneaded.

The measurement and evaluation were carried out in the same way as in Example 1. The results of the measurement and other things are shown in Table 2.

Comparative Example 1

Example 1 was repeated, except that 100 parts by weight of the one produced in Preparation Example 1 as the component (A), 0 part by weight of the component (B), and 0 part by weight of the component (C) were used to form a sheet.

The measurement and evaluation were carried out in the same way as in Example 1. The results of the measurement and other things are shown in Table 3.

Any straight-chain, branched, or network rubber-like products were not observed and the value measured by pulse NMR was a little below the lower limit value. As a result, the overall haze was large and the Du Pont impact value was small.

Comparative Example 2

Example 1 was repeated, except that 65 parts by weight of the one produced in Preparation Example 3 as the component (A), 30 parts by weight of the component (B), and 5 parts by weight of the component (C) were kneaded.

The measurement and evaluation were carried out in the same way as in Example 1. The results of the measurement and other things are shown in Table 3.

The number of particles of the rubbery elastomer in the form of particles was small and the surface mean particle diameter was large. As a result, the overall haze was large.

Comparative Example 3

Example 1 was repeated, except that 45 parts by weight of the one produced in Preparation Example 4 as the component (A), 50 parts by weight of the component (B), and 5 parts by weight of the component (C) were kneaded.

The measurement and evaluation were carried out in the same way as in Example 1. The results of the measurement and other things are shown in Table 3.

Any rubbery elastomers in the form of particles were not observed. As a result, the overall haze was large and the Du Pont impact value was small.

Comparative Example 4

Example 1 was repeated, except that 65 parts by weight of the one produced in Preparation Example 4 as the component (A), 30 parts by weight of the component (B), and 5 parts by weight of the component (C) were kneaded.

The measurement and evaluation were carried out in the same way as in Example 1. The results of the measurement and other things are shown in Table 3.

Any rubbery elastomer in the form of particles was not observed. As a result, the overall haze was large and the Du Pont impact value was small.

Table 2

| Examples | | | | | |
|---|---|---|---|---|---|
| Example | 1 | 2 | 3 | 4 | 5 |
| Preparation of Component (A) | Prep. Ex. 1 | Prep. Ex. 1 | Prep. Ex. 2 | Prep. Ex. 2 | Prep. Ex. 2 |
| Amount of component (A) (pts.) | 65 | 50 | 30 | 65 | 80 |
| Amount of component[1] (B) (pts.) | 30 | 50 | 60 | 30 | 15 |
| Amount of component[2] (C) (pts.) | 5 | 0 | 10 | 5 | 5 |
| Pulse signal strength (%) | 25.3 | 27.3 | 34.2 | 20.7 | 16.2 |
| Number of rubber particles (per 4 $\mu m^2$) | 130 | 98 | 52 | 67 | 114 |
| Average particle diameter of rubber particles ($\mu$m) | 0.077 | 0.077 | 0.07 | 0.067 | 0.068 |
| Total length of straight-chain and other rubber parts ($\mu$m) | 41.8 | 46.2 | 76.4 | 39.6 | 22.0 |
| Average thickness of straight-chain and other rubber parts ($\mu$m) | 0.033 | 0.027 | 0.031 | 0.032 | 0.034 |
| Overall haze of straight-chain and other rubber parts (%) | 2.6 | 1.9 | 2.5 | 3.3 | 5.2 |
| Du Pont shock strength (23 °C, J) | 3.6 | 3.7 | 6.0 | 1.3 | 0.8 |
| Tensional modulus MD (MPa) | 2490 | 2270 | 1610 | 2590 | 2740 |
| Tensional modulus TD (MPa) | 1720 | 1340 | 730 | 1860 | 2160 |
| Anisotropy (TD/MD) | 0.69 | 0.59 | 0.45 | 0.72 | 0.79 |

*1 "Asaflex 810" (styrene/butadiene block copolymer) (styrene content: about 70 wt. %) manufactured by Asahi Chemical Industry Co., Ltd.
*2 "Toughprene 125" (styrene/butadiene block copolymer) (styrene content: about 40 wt. %) manufactured by Asahi Chemical Industry Co., Ltd.

Table 3

| Comparative Examples | | | | |
|---|---|---|---|---|
| Comparative Example | 1 | 2 | 3 | 4 |
| Preparation of component (A) | Prep. Ex. 1 | Prep. Ex. 3 | Prep. Ex. 4 | Prep. Ex. 4 |
| Amount of component (A) (pts.) | 100 | 65 | 45 | 65 |
| Amount of component[*1] (B) (pts.) | 0 | 30 | 50 | 30 |
| Amount of component[*2] (C) (pts.) | 0 | 5 | 5 | 5 |
| Pulse signal strength (%) | 14.1 | 25.9 | 22.9 | 15.7 |
| Number of rubber particles (per 4 $\mu m^2$) | 193 | 31 | none | none |
| Average particle diameter of rubber particles ($\mu$m) | 0.078 | 0.21 | - | - |
| Total length of straight-chain and other rubber parts ($\mu$m) | 0 | 41.0 | 54.6 | 42.2 |
| Average thickness of straight-chain and other rubber parts ($\mu$m) | - | 0.027 | 0.03 | 0.024 |
| Overall haze of straight-chain and other rubber parts (%) | 9.0 | 9.2 | 3.8 | 5.0 |
| Du Pont shock strength (23 °C, J) | 0.1 or less | 5.1 | 1.1 | 0.6 |
| Tensional modulus MD (MPa) | 3110 | 2260 | 2640 | 2910 |
| Tensional modulus TD (MPa) | 3050 | 1400 | 1270 | 2010 |
| Anisotropy (TD/MD) | 0.98 | 0.62 | 0.48 | 0.69 |

*1 "Asaflex 810" (styrene/butadiene block copolymer) (styrene content: about 70 wt. %) manufactured by Asahi Chemical Industry Co., Ltd.

*2 "Toughprene 125" (styrene/butadiene block copolymer) (styrene content: about 40 wt. %) manufactured by Asahi Chemical Industry Co., Ltd.

Examples based on the second invention and Comparative Examples

Preparation Example 11

The production method for the component (A) in Preparation Example 1 was used.

The obtained pellets were analyzed. The values of the butadiene content measured by NMR, the form of rubber particles, the rubber particle diameter, the toluene insoluble matter, the molecular weight, the melt index (MI) are shown in Table 4. In order to know the relationship of the butadiene content measured by NMR to the charged amount of butadiene, when the upper limit and lower limit of the butadiene content of the present invention were used for the measurement, 60 parts by weight of a charged raw material HIPS (rubber content of 5 % (3 % in terms of polybutadiene)) and 40 parts by weight of Asaflex (30 % in terms of polybutadiene) were formed into a sheet and the butadiene content was measured by NMR and found to be 14 %. Similarly, 35 parts by weight of a charged raw material HIPS (rubber content of 20 % (12 % in terms of polybutadiene)) and 50 parts by weight of Asaflex (30 % in terms of polybutadiene), 15 parts by weight of Toughprene (60 % in terms of polybutadiene) were formed into a sheet and the butadiene content was measured by NMR and was found to be 31 %.

Preparation Example 12

The production in Preparation Example 11 was repeated, except that the amount of normal dodecyl mercaptan to be dissolved in the rubber solution was made to be 0 ppm and the ethylbenzene solution of normal dodecyl mercaptan to be fed to the third reactor was changed to ethylbenzene.

Table 4

| Preparation Examples of HIPS with a dot structure of the base | | |
|---|---|---|
| Preparation Example | 11 | 12 |
| Rubber species[*1] | BL 6533 | BL 6533 |
| Amount of charged rubber (%) | 15 | 15 |
| Final conversion (%) | 90 | 90 |
| Polymerization initiator[*2] (ppm) | 400 | 400 |
| Chain transfer agent[*3] (ppm) | 100 | 0 |
| Chain transfer agent[*4] (ppm) | 100 | 0 |
| NMR butadiene content (wt. %) | 9.0 | 9.3 |
| Shape of rubber particles | dot | dot |
| Rubber particle diameter ($\mu$m) | 0.08 | 0.06 |
| Toluene insoluble matter (wt. %) | 16.6 | 10.8 |
| Molecular weight (x $10^4$) | 16.7 | 18.0 |
| MI (g/10 min) | 3.2 | 3.0 |

[*1] Rubber species: BUNA BL 6533 manufactured by Bayer AG (styrene/butadiene diblock copolymer)
[*2] Polymerization initiator: t-butylperoxy-3,3,5-trimethylcyclohexane (charged into the first reactor)
[*3] Chain transfer agent: normal dodecyl mercaptan (charged into the first reactor)
[*4] Chain transfer agent: normal dodecyl mercaptan (charged into the third reactor)

### Example 11

65 parts by weight of HIPS (rubber-modified polystyrene) shown in the above Preparation Example 11 was mixed with 30 parts by weight of a styrene/butadiene/styrene triblock rubber (hereinafter referred to as "SBS rubber") having a styrene content of 70 % by weight (Asaflex 810 manufactured by Asahi Chemical Industry Co., Ltd.), and 5 parts by weight of SBS rubber having a styrene content of 40 % by weight (Toughprene 125 manufactured by Asahi Chemical Industry Co., Ltd.) in a tumbling barrel, the mixture was extruded through an extruder having a bore diameter of 35 mm at a resin temperature of 230 °C into a sheet 0.5 mm in thickness. A test sample was cut out from the sheet and the physical properties including the transparency (haze: JIS K-7105), the impact resistance (Du Pont shock strength: JIS K-7211), the rigidity (tensional modulus: JIS K-7113), and the anisotropy (TD/MD: ratio of the tensional modululi) were evaluated. The results of the measurement and other things are shown in Table 5.

### Example 12

Example 11 was repeated, except that the amount of HIPS was changed to 44 parts by weight, the amount of SBS rubber (high styrene: Asaflex 810) was changed to 48 parts by weight, and the amount of SBS rubber (low styrene: Toughprene 125) was changed to 8 parts by weight.

### Example 13

Example 11 was repeated, except that the amount of HIPS was changed to 50 parts by weight, the amount of SBS rubber (high styrene: Asaflex 810) was changed to 50 parts by weight, and the amount of SBS rubber (low styrene: Toughprene 125) was changed to 0.

### Example 14

Example 11 was repeated, except that 65 parts by weight of the HIPS shown in Preparation Example 12, 30 parts by weight of SBS rubber (high styrene: Asaflex 810), and 5 parts by weight of SBS rubber (low styrene: Toughprene 125) were kneaded.

Comparative Example 11

Example 11 was repeated, except that the HIPS shown in Preparation Example 11 was made into a sheet and the physical properties thereof were evaluated. The results are shown in Table 6.

Comparative Example 12

Example 11 was repeated, except that 27 parts by weight of the HIPS shown in Preparative Example 11, 65 parts by weight of SBS rubber (high styrene: Asaflex 810), and 8 parts by weight of SBS rubber (low styrene: Toughprene 125) were kneaded.

Comparative Example 13

Example 11 was repeated, except that 85 parts by weight of the HIPS shown in Preparative Example 11, 15 parts by weight of SBS rubber (high styrene: Asaflex 810), and 0 part by weight of SBS rubber (low styrene: Toughprene 125) were kneaded.

Comparative Example 14

Example 11 was repeated, except that 45 parts by weight of GPPS (Homopolystyrene HH30E manufactured by Idemitsu Petrochemical Co., Ltd.) instead of the HIPS shown in Preparative Example 11, 50 parts by weight of SBS rubber (high styrene: Asaflex 810), and 5 parts by weight of SBS rubber (low styrene: Toughprene 125) were kneaded.

Comparative Example 15

Example 11 was repeated, except that 65 parts by weight of GPPS instead of the HIPS shown in Preparative Example 11, 30 parts by weight of SBS rubber (high styrene: Asaflex 810), and 5 parts by weight of SBS rubber (low styrene: Toughprene 125) were kneaded.

Table 5

| Examples | | | | |
|---|---|---|---|---|
| Example | 11 | 12 | 13 | 14 |
| Base HIPS | Prep. Ex. 11 | Prep. Ex. 11 | Prep. Ex. 11 | Prep. Ex. 12 |
| Amount of base HIPS (pts..) | 65 | 44 | 50 | 65 |
| Amount of Asaflex 810[*1] (pts..) | 30 | 48 | 50 | 30 |
| Amount of Toughprene 125[*2] (pts..) | 5 | 8 | 0 | 5 |
| NMR butadiene content (wt. %) | 21.2 | 27.1 | 22.3 | 21.0 |
| Toluene insoluble matter (wt. %) | 11.5 | 9.3 | 8.1 | 9.2 |
| Toluene insoluble matter/butadiene content | 0.54 | 0.34 | 0.36 | 0.43 |
| Overall haze (%) | 2.7 | 2.2 | 1.7 | 2.2 |
| Du Pont impact strength (23 °C, J) | 1.3 | 4.5 | 1.8 | 1.1 |
| Tensional modulus MD (MPa) | 2480 | 1620 | 1910 | 2520 |
| Tensional modulus TD (MPa) | 1690 | 890 | 1130 | 1610 |
| Anisotropy (TD/MD) | 0.68 | 0.55 | 0.59 | 0.64 |

*1 Styrene/butadiene/styrene triblock rubber (styrene content: 70 wt. %) manufactured by Asahi Chemical Industry Co., Ltd.
*2 Styrene/butadiene/styrene triblock rubber (styrene content: 40 wt. %) manufactured by Asahi Chemical Industry Co., Ltd.

## Table 6. Comparative Examples

| Comparative Example | 11 | 12 | 13 | 14 | 15 |
|---|---|---|---|---|---|
| Base HIPS | Prep. Ex. 11 | Prep. Ex. 11 | Prep. Ex. 11 | GPPS*3 | GPPS*3 |
| Amount of base HIPS (pts..) | 100 | 27 | 85 | 45 (GPPS) | 65 (GPPS) |
| Amount of Asaflex 810*1 (pts..) | 0 | 65 | 15 | 50 | 30 |
| Amount of Toughprene 125*2 (pts..) | 0 | 8 | 0 | 5 | 5 |
| NMR butadiene content (wt. %) | 9.0 | 32.0 | 13.0 | 22.3 | 16.5 |
| Toluene insoluble matter (wt. %) | 16.7 | 4.6 | 14.5 | 0 | 0 |
| Toluene insoluble matter/butadiene content | 1.86 | 0.14 | 1.12 | 0 | 0 |
| Overall haze (%) | 8.6 | 2.0 | 5.3 | 3.6 | 4.7 |
| Du Pont impact strength (23 ℃, J) | limit or below | 6.6 | 0.5 | 1.0 | 0.7 |
| Tensional modulus MD (MPa) | 3080 | 1240 | 2820 | 2620 | 3140 |
| Tensional modulus TD (MPa) | 3010 | 490 | 2400 | 1290 | 2090 |
| Anisotropy (TD/MD) | 0.98 | 0.40 | 0.85 | 0.49 | 0.67 |

EP 0 796 895 A1

Table 6. Comparative Examples (continued)

| Comparative Example | 11 | 12 | 13 | 14 | 15 |
|---|---|---|---|---|---|
| Evaluation | no impact resistance | The amount of rubber was too high, the rigidity was low, and the anisotropy was high. | The amount of rubber was low and the impact resistance was low. | The GPPS/SBS anisotropy was high. The gel was not removed. | The transparency was poor (in comparison with Example 11), when GPPS/SBS dot HIPS was not used. |

*1 Styrene/butadiene/styrene triblock rubber (styrene content: 70 wt. %) manufactured by Asahi Chemical Industry Co., Ltd.

*2 Styrene/butadiene/styrene triblock rubber (styrene content: 40 wt. %) manufactured by Asahi Chemical Industry Co., Ltd.

*3 Polystyrene HH30E manufactured by Idemitsu Petrochemical Co., Ltd.

**Claims**

1. A rubber-modified aromatic vinyl resin composition, comprising rubbery elastomer parts in the form of particles having a major diameter/minor diameter ratio from 1 to 2 and straight-chain, branched, or network rubbery elastomer parts which are dispersed in an aromatic vinyl polymer, the surface mean particle diameter of said rubbery elastomer parts in the form of particles being 0.1 $\mu$m or less and the average thickness of said straight-chain, branched, or network rubbery elastomer parts being 0.04 $\mu$m or less.

2. The rubber-modified aromatic vinyl resin composition as claimed in claim 1, wherein 40 or more of said rubbery elastomer parts in the form of particles are observed per 4 $\mu$m$^2$ and the total length of said straight-chain, branched, or network rubbery elastomer parts is 20 $\mu$m or more per 4 $\mu$m$^2$ when the rubber-modified aromatic vinyl resin composition is observed under a transmission electron microscope.

3. The rubber-modified aromatic vinyl resin composition as claimed in claim 1 or 2, wherein the signal strength 60 $\mu$s after the pulse irradiation is 15 to 35 % of the signal strength immediately after the pulse irradiation in the free induction decay measurement by pulse NMR.

4. A rubber-modified aromatic vinyl resin composition, comprising

   30 to 80 % by weight of a component (A) made of a rubber-modified aromatic vinyl resin composition comprising a rubbery elastomer in the form of particles having a major diameter/minor diameter ratio of from 1 to 2 that are dispersed in a matrix of an aromatic vinyl resin, said rubbery elastomer amounting to 3 to 25 % by weight, and the surface mean particle diameter of said rubbery elastomer being 0.1 $\mu$m or less,
   10 to 70 % by weight of a component (B) made of a thermoplastic block copolymer made up of 55 to 85 % by weight of an aromatic vinyl compound and 15 to 45 % by weight of a conjugated diene compound, and
   0 to 15 % by weight of a component (C) made of a thermoplastic block copolymer made up of 10 to 50 % by weight of an aromatic vinyl compound and 50 to 90 % by weight of a conjugated diene compound.

5. A rubber-modified aromatic vinyl resin composition having rubber particles dispersed in a continuous phase of an aromatic vinyl resin, wherein the rubber particles are in the form of a mixture of dotlike or rodlike particles and stringlike particles, the total content of the butadiene components in the resin composition amounts to 14 to 31 % by weight in the resin composition, and the weight ratio of the toluene insoluble matter to the total content of the butadiene components in the resin composition is in the range of from 0.1 to 1.8.

6. A rubber-modified aromatic vinyl resin composition, comprising stringlike rubber particles that are blended in an amount of 16 to 70 parts by weight with 84 to 30 parts by weight of a rubber-modified aromatic vinyl resin composition that has dotlike or rodlike rubber particles and in which 3 to 25 % by weight of a rubber-like polymer has been added.

7. The rubber-modified aromatic vinyl resin composition as claimed in claim 5 or 6, wherein said stringlike particles are made of a styrene/butadiene/styrene triblock rubber.

# FIG. I

# FIG. 2

# FIG. 3

# FIG.4

EP 0 796 895 A1

| | European Patent Office | EUROPEAN SEARCH REPORT | Application Number EP 97 10 4573 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP 0 196 013 A (BASF AG) 1 October 1986 * claims * | 1 | C08L25/02 C08L51/04 //(C08L25/02, 21:00,53:02), (C08L51/04, 53:02) |
| D,A | PATENT ABSTRACTS OF JAPAN vol. 003, no. 087 (C-053), 25 July 1979 & JP 54 062251 A (NIPPON STEEL CHEM CO LTD), 19 May 1979, * abstract * | 1 | |
| D,A | EP 0 069 792 A (DOW CHEMICAL CO) 19 January 1983 * claims * | 1 | |
| A | EP 0 590 965 A (NIPPON ZEON CO) 6 April 1994 * claims; example 4COMP * | 1 | |

| | | | TECHNICAL FIELDS SEARCHED (Int.Cl.6) |
| | | | C08L |

The present search report has been drawn up for all claims

| Place of search | Date of completion of the search | Examiner |
|---|---|---|
| THE HAGUE | 4 July 1997 | DE LOS ARCOS, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document